# EUROPEAN PATENT APPLICATION

(11) **EP 4 653 557 A1**
(43) Date of publication of application: **26.11.2025**
(21) Application number: 24803374.8
(22) Date of filing: 23.04.2024
(51) Int. Cl.: C21D 8/12, C21D 9/46, C22C 38/00, C22C 38/60, C23C 22/00, H01F 1/147

(54) **METHOD FOR MANUFACTURING GRAIN-ORIENTED ELECTRICAL STEEL SHEET**

(30) Priority: 10.05.2023 JP 2023078183
(71) Applicant: JFE Steel Corporation, Tokyo 100-0011 (JP)
(72) Inventor: YAMADA, Takuya, Tokyo 100-0011 (JP); TERASHIMA, Takashi, Tokyo 100-0011 (JP)
(74) Representative: Hoffmann Eitle
(86) International application number: PCT/JP2024/015939
(87) International publication number: WO 2024/232261

(57) **Abstract**

**Data on** decarburization annealed sheet quality index and final annealing conditions of a product sheet are acquired, and data on oxygen coating weight and (Ti + V + Zr + Nb) coating weight contained in a forsterite film of the product sheet are also acquired. Using actual values of each coating weight as objective variables, and using actual values of decarburization annealed sheet quality index, annealing separator composition, and final annealing conditions as explanatory variables, a prediction model for each coating weight is created through multiple regression analysis or machine learning. The steel sheet is divided into i segments in the longitudinal direction and into j segments in the transverse direction and positions (m, n) are defined, and using the prediction model for each coating weight and based on values of decarburization annealed sheet quality index at each position (m, n), annealing separator composition and final annealing conditions are set so that both an oxygen coating weight and a (Ti + V + Zr + Nb) coating weight / oxygen coating weight ratio at each position (m, n) fall within a range defined by film adhesion.

## Description

### TECHNICAL FIELD

This disclosure relates to a method for manufacturing a grain-oriented electrical steel sheet that exhibits excellent film properties throughout the entire longitudinal and transverse directions.

### BACKGROUND

A grain-oriented electrical steel sheet is a soft magnetic material mainly used for iron cores of transformers and similar devices, and it is required to have excellent magnetic properties, namely low iron loss and high magnetic flux density. Such a grain-oriented electrical steel sheet is manufactured by subjecting a base material containing inhibitor-forming components such as MnS, MnSe, or AlN to hot rolling, optionally followed by hot-rolled sheet annealing, then subjecting the material to cold rolling either once or twice or more with intermediate annealing performed therebetween, followed by decarburization annealing, applying an annealing separator mainly composed of MgO to the steel sheet surface, and then performing final annealing.

In the final annealing, an oxide film mainly composed of SiO₂ formed during the decarburization annealing reacts with the annealing separator mainly composed of MgO, resulting in the formation of a forsterite film. This forsterite film not only provides insulation to the steel sheet surface, but also functions to improve the magnetic properties of the steel sheet by imparting tensile stress derived from its low thermal expansion properties.

Accordingly, forming a forsterite film with excellent film properties - that is, a forsterite film that adheres well throughout the entire longitudinal and transverse directions of the steel sheet - is extremely important for manufacturing a grain-oriented electrical steel sheet with excellent magnetic properties.

On the other hand, since the decarburization annealing is a continuous annealing process conducted in a highly oxidizing atmosphere, the oxidizing conditions inside the furnace tends to fluctuate, leading to variations in the quality of the decarburization annealed sheet, such as the amount and morphology of the oxide film.

Moreover, when variations occur in the surface composition or surface roughness of the steel sheet in the processes prior to decarburization annealing, such variations may also lead to variations in the formation of the oxide film.

In addition, since the final annealing is carried out as batch annealing with the sheet being a coil, temperature unevenness tends to occur within the coil, leading to variations in film properties.

In response to these problems, JP 2020-196773 A (PTL 1) proposes a technique in which the composition of the annealing separator is varied in both the longitudinal and transverse directions of the steel sheet prior to application.

Conventionally, the adhesion of the forsterite film is evaluated by a bending peel test. However, since the bending peel test is a destructive test, it is impossible to evaluate the properties all over the product. Therefore, despite the tendency for variations in the film properties as described above, there has been a problem that the film adhesion could not be evaluated throughout the entire longitudinal and transverse directions of the sheet in a way that accounts for such variation.

In response to this problem, JP 2011-158328 A (PTL 2) proposes a technique in which light is irradiated onto the surface of the steel sheet to evaluate the film adhesion based on brightness.

### CITATION LIST

### Patent Literature

PTL 1: JP 2020-196773 A
PTL 2: JP 2011-158328 A

### SUMMARY

### (Technical Problem)

However, the technique described in PTL 1 has the problem that it involves high manufacturing costs and does not necessarily achieve sufficient effectiveness, which also leads to variations in film properties.

Further, the technique described in PTL 2 has the problem that even slight differences in material composition or manufacturing conditions can cause a mismatch between brightness and film adhesion, making it difficult to accurately evaluate the film adhesion.

It could thus be helpful to provide a method for manufacturing a grain-oriented electrical steel sheet that enables stable manufacture of grain-oriented electrical steel sheets with excellent film properties by non-destructively assessing the film properties throughout the entire longitudinal and transverse directions of product steel sheets.

### (Solution to Problem)

Primary features of the present disclosure are as follows.
1. A method for manufacturing a grain-oriented electrical steel sheet, comprising: subjecting a steel material for grain-oriented electrical steel sheet to hot rolling, then to cold rolling either once or twice or more with intermediate annealing performed therebetween, and then to decarburization annealing; applying an annealing separator mainly composed of MgO to a steel sheet surface, and performing final annealing to obtain a product sheet, wherein data on decarburization annealed sheet quality index and final annealing conditions of the steel sheet are acquired, and data on oxygen coating weight and (Ti + V + Zr + Nb) coating weight contained in a forsterite film of the product sheet are also acquired; using actual values of each coating weight as objective variables, and using actual values of decarburization annealed sheet quality index, annealing separator composition, and final annealing conditions as explanatory variables, a prediction model for each coating weight is created through multiple regression analysis or machine learning; the steel sheet is divided into i segments in a longitudinal direction and into j segments in a transverse direction and positions (m, n) are defined where 1 ≤ m ≤ i and 1 ≤ n ≤ j, and using the prediction model for each coating weight and based on values of decarburization annealed sheet quality index at each position (m, n), annealing separator composition and final annealing conditions are set so that both an oxygen coating weight and a (Ti + V + Zr + Nb) coating weight / oxygen coating weight ratio at each position (m, n) fall within a range defined by film adhesion.
2. The method for manufacturing a grain-oriented electrical steel sheet according to 1., wherein in the product sheet, a maximum value of the oxygen coating weight is 1.00 g/m² or more, and a maximum value of the (Ti + V + Zr + Nb) coating weight / oxygen coating weight ratio is 0.01 or more.
3. The method for manufacturing a grain-oriented electrical steel sheet according to 1. or 2., wherein the decarburization annealed sheet quality index includes at least one selected from the group consisting of O concentration, Si concentration, P concentration, and Mn concentration on the steel sheet surface, and amount of SiO₂, amount of FeSiO₃, and amount of Fe₂SiO₄ formed on the steel sheet surface.
4. The method for manufacturing a grain-oriented electrical steel sheet according to any one of 1. to 3., wherein the annealing separator composition includes at least one selected from the group consisting of Ti content, V content, Zr content, and Nb content contained in the annealing separator.
5. The method for manufacturing a grain-oriented electrical steel sheet according to any one of 1. to 4., wherein the final annealing conditions include either or both of H₂ gas introduction temperature, and heating rate at temperatures between 950 °C and 1100 °C.

### (Advantageous Effect)

According to the present disclosure, it is possible to stably manufacture a grain-oriented electrical steel sheet that exhibits excellent film properties throughout the entire longitudinal and transverse directions.

### BRIEF DESCRIPTION OF THE DRAWINGS

In the accompanying drawings:
FIG. 1A indicates the fluorescent X-ray Mn intensity at each position (m, n) of a decarburization annealed sheet in Comparative Example of the present disclosure;
FIG. 1B indicates the fluorescent X-ray Mn intensity at each position (m, n) of a decarburization annealed sheet in Example of the present disclosure;
FIG. 2A indicates the surface temperature of the steel sheet when H₂ gas is introduced in final annealing at each position (m, n) in Comparative Example of the present disclosure;
FIG. 2B indicates the surface temperature of the steel sheet when H₂ gas is introduced in final annealing at each position (m, n) in Example of the present disclosure;
FIG. 3A indicates the oxygen coating weight of a product sheet at each position (m, n) in Comparative Example of the present disclosure;
FIG. 3B indicates the oxygen coating weight of a product sheet at each position (m, n) in Example of the present disclosure;
FIG. 4A indicates the (Ti + V + Zr + Nb coating weight) / oxygen coating weight ratio of a product sheet at each position (m, n) in Comparative Example of the present disclosure; and
FIG. 4B indicates the (Ti + V + Zr + Nb coating weight) / oxygen coating weight ratio of a product sheet at each position (m, n) in Example of the present disclosure.

### DETAILED DESCRIPTION

First, the steel material composition used in the method for manufacturing a grain-oriented electrical steel sheet (hereinafter also simply referred to as "steel sheet") according to one embodiment of the present disclosure will be described. The steel material composition may be a conventionally known chemical composition. Specifically, it is as follows. The balance other than the following components is Fe and inevitable impurities.

Carbon (C) is an effective element for improving the texture of the steel, but if its content is less than 0.01 mass%, the effect is insufficient. On the other hand, if its content exceeds 0.1 mass%, decarburization becomes difficult, and the magnetic properties deteriorate. Therefore, it is preferably within the range of 0.01 mass% to 0.1 mass%. The lower limit is more preferably 0.02 mass%. The upper limit is more preferably 0.08 mass%.

Silicon (Si) is an effective element for increasing specific resistance and improving magnetic properties, but if its content is less than 1.0 mass%, the effect is insufficient. On the other hand, if its content exceeds 5.0 mass%, the cold workability significantly deteriorates. Therefore, it is preferably within the range of 1.0 mass% to 5.0 mass%. The lower limit is more preferably 2.0 mass%. The upper limit is more preferably 4.0 mass%.

Manganese (Mn), like Si, increases specific resistance and improves magnetic properties. It is also effective for improving hot workability. However, if its content is less than 0.01 mass%, the effect is insufficient. On the other hand, if its content exceeds 0.5 mass%, the magnetic properties deteriorate. Therefore, it is preferably within the range of 0.01 mass% to 0.5 mass%. The lower limit is more preferably 0.02 mass%. The upper limit is more preferably 0.2 mass%.

In the present disclosure, conventionally known MnS, MnSe, or AlN may be used as inhibitors. When using MnS or MnSe, it is preferable to add 0.01 mass% to 0.5 mass% of Mn and 0.002 mass% to 0.03 mass% of S or 0.002 mass% to 0.03 mass% of Se. When using AlN, it is preferable to add 0.004 mass% to 0.04 mass% of Al and 0.002 mass% to 0.03 mass% of N. These inhibitors may be used alone or in combination.

Furthermore, for the purpose of improving magnetic properties, at least one selected from the group consisting of the following may be added in mass%: B: 0.0001 % to 0.005 %, Ti: 0.001 % to 0.01 %, P: 0.005 % to 0.1 %, Cr: 0.01 % to 0.5 %, Ni: 0.01 % to 1.5 %, Cu: 0.01 % to 0.5 %, Nb: 0.002 % to 0.08 %, Mo: 0.005 % to 0.1 %, Sn: 0.005 % to 0.5 %, Sb: 0.005 % to 0.5 %, and Bi: 0.001 % to 0.05 %.

Next, a method for manufacturing a grain-oriented electrical steel sheet according to one embodiment of the present disclosure will be described.

First, a steel material for grain-oriented electrical steel sheet, which has been adjusted to the chemical composition described above, is subjected to hot rolling, optionally followed by hot-rolled sheet annealing, then to cold rolling either once or twice or more with intermediate annealing performed therebetween, and then to decarburization annealing.

In the decarburization annealing, the annealing temperature is preferably within the range of 750 °C to 950 °C, and the annealing time is preferably within the range of 80 seconds to 200 seconds. If the annealing temperature is lower than 750 °C or the time is shorter than 80 seconds, decarburization may be insufficient. On the other hand, if the annealing temperature exceeds 950 °C or the time exceeds 200 seconds, the primary recrystallized grains grow excessively and secondary recrystallization is suppressed, which may result in deterioration of magnetic properties.

It is also preferable that the oxidizing conditions (PH₂O/PH₂) during the decarburization annealing be in the range of 0.3 to 0.6. If PH₂O/PH₂ is less than 0.3, decarburization may be insufficient. On the other hand, if PH₂O/PH₂ exceeds 0.6, FeO may be formed, which deteriorates the film properties.

In this embodiment, it is important to acquire data on decarburization annealed sheet quality index of the steel sheet (in this example, acquired by either calculation or measurement), because it contributes to determining the final annealing conditions.

The decarburization annealed sheet quality index includes, for example, the concentrations of O, Si, P, and Mn on the steel sheet surface, and the amounts of SiO₂, FeSiO₃, and Fe₂SiO₄ formed. Ratios between any of these concentrations or formed amounts may also be used as the quality index. The decarburization annealed sheet quality index may be acquired by measurement using techniques such as X-ray fluorescence analysis or infrared spectroscopy, or may be calculated based on decarburization annealing conditions such as annealing temperature, time, and oxidizing conditions.

Subsequently, an annealing separator mainly composed of MgO is applied to the steel sheet surface. For the purpose of improving film properties, at least one compound selected from Ti, Zr, V, and Nb compounds is added to the annealing separator. The total amount of these additives, converted to the corresponding metal elements, is preferably in the range of 1 mass% to 7 mass%. If the amount is less than 1 mass%, the effect is insufficient. On the other hand, if the amount exceeds 7 mass%, the metal elements may penetrate into the steel, potentially deteriorating the magnetic properties. The type of compound is not limited. For example, oxides, hydroxides, borates, carbonates, nitrates, phosphates, sulfates, and halides may be used. These compounds may be used alone or in combination.

It is preferable to record the composition data of the applied annealing separator, as it will be used later in the creation of a prediction model.

Furthermore, for the purpose of improving film properties and magnetic properties, it is also possible to add conventionally known oxides, hydroxides, borates, carbonates, nitrates, phosphates, sulfates, and halides of Li, Na, Mg, Al, Si, K, Ca, Fe, Co, Ni, Cu, Sr, Ba, and lanthanoids. These additives may be used alone or in combination.

The amount of these additives is preferably in the range of 0.01 parts by mass to 15 parts by mass per 100 parts by mass of MgO. If the amount is less than 0.01 parts by mass, the effect is insufficient. On the other hand, if the amount exceeds 15 parts by mass, excessive film formation or excessive suppression may occur, potentially deteriorating the magnetic properties.

Next, final annealing is performed. The final annealing may include secondary recrystallization annealing for promoting secondary recrystallization and purification annealing for purifying the inhibitors.

In the secondary recrystallization annealing, when secondary recrystallization is completed during soaking, the annealing temperature is preferably within the range of 800 °C to 1000 °C and the annealing time is preferably within the range of 5 hours to 200 hours. If the annealing temperature is lower than 800 °C or the time is shorter than 5 hours, secondary recrystallization may not be completed during soaking, potentially deteriorating the magnetic properties. On the other hand, if the annealing temperature exceeds 1000 °C or the time exceeds 200 hours, the coil may collapse, leading to deformation.

Further, when secondary recrystallization is completed during heating, the heating rate is preferably in the range of 2.5 °C/h to 50 °C/h at temperatures between 700 °C and 1100 °C. If the heating rate is less than 2.5 °C/h, the coil may collapse, leading to deformation. On the other hand, if the heating rate exceeds 50 °C/h, secondary recrystallized grains may become too fine, potentially deteriorating the magnetic properties. In this case, the annealing atmosphere is an inert atmosphere of N₂ or Ar.

In the purification annealing, the annealing temperature is preferably within the range of 1150 °C to 1250 °C, and the annealing time is preferably within the range of 2 hours to 50 hours. If the annealing temperature is lower than 1150 °C or the time is shorter than 2 hours, purification may be insufficient. On the other hand, if the annealing temperature exceeds 1250 °C or the time exceeds 50 hours, the coil may collapse, leading to deformation.

Further, for the purpose of promoting film formation and purification, H₂ gas is introduced at a selected temperature within the range of 900 °C to 1050 °C. By introducing H₂ gas, iron oxides formed on the steel sheet surface are reduced, improving the oxidizing conditions inside the furnace and thereby promoting film formation. If the H₂ gas introduction temperature is lower than 900 °C, inhibitors may decompose before the completion of secondary recrystallization, potentially deteriorating the magnetic properties. On the other hand, if the H₂ gas introduction temperature exceeds 1050 °C, the effect is insufficient.

In this embodiment, it is important to acquire data on final annealing conditions of the steel sheet (in this example, acquired by either calculation or measurement), because these conditions directly affect the film properties.

The final annealing conditions include either or both of the H₂ gas introduction temperature and the heating rate at temperatures between 950 °C and 1100 °C. These final annealing conditions may be acquired by measurement, such as by embedding thermocouples inside the coil for actual measurement, or may be calculated based on annealing temperature, time, and other final annealing parameters.

Furthermore, in this embodiment, it is important to acquire data on the oxygen coating weight and the total coating weight of Ti + V + Zr + Nb contained in a forsterite film of a product sheet (in this example, acquired by measurement). This is because the magnitude of these coating weights can reproducibly estimate a key index related to peel resistance-i.e., film adhesion, which is the most important among film properties-thus enabling non-destructive control of the film properties of the steel sheet.

The data is acquired by measurement, and a method for non-destructively measuring the coating weight of each element includes, for example, measuring the fluorescent X-ray intensity of each element and then converting the values into coating weights of corresponding elements using previously prepared calibration curves.

In the method according to this embodiment, the data on the decarburization annealed sheet quality index and the final annealing conditions of the steel sheet, and the data on the oxygen coating weight and the total coating weight of Ti + V + Zr + Nb contained in the forsterite film of the product sheet are first acquired

Next, using the actual values of these coating weights as objective variables, and using the actual values of the decarburization annealed sheet quality index, the annealing separator composition, and the final annealing conditions as explanatory variables, a prediction model for each coating weight is created through multiple regression analysis or machine learning.

Furthermore, in the manufacturing method of this embodiment, the steel sheet is divided into i segments in the longitudinal direction and into j segments in the transverse direction, and positions (m, n) are defined (where 1 ≤ m ≤ i and 1 ≤ n ≤ j).

Then, using the prediction models for the coating weights, the annealing separator composition and final annealing conditions are varied within a certain range for the decarburization annealed sheet quality index at each position (m, n), and the annealing separator composition and final annealing conditions are set such that the maximum value of the oxygen coating weight and the maximum value of the (Ti + V + Zr + Nb coating weight) / oxygen coating weight ratio at each position (m, n) fall within a range defined by film adhesion.

That is, in this embodiment, when using the prediction models for the coating weights, the decarburization annealed sheet quality index, the final annealing conditions, and the coating weights of the product sheet at each position (m, n) are used, where the steel sheet is divided into i segments in the longitudinal direction and j segments in the transverse direction (where 1 ≤ m ≤ i and 1 ≤ n ≤ j).

Each position (m, n) refers to a segmented region obtained by dividing the steel sheet into i segments in the longitudinal direction, preferably 10 to 100 segments, and j segments in the transverse direction, preferably 5 to 20 segments.

Furthermore, when creating the prediction models for the coating weights, the decarburization annealed sheet quality index and the final annealing conditions related to the steel sheet (acquired, for example, by calculation or measurement), as well as the oxygen coating weight and the total coating weight of Ti + V + Zr + Nb contained in the forsterite film of the product sheet (acquired, for example, by measurement), may be acquired by dividing the steel sheet into i segments in the longitudinal direction and j segments in the transverse direction and performing the respective calculations or measurements for each segment.

When the concentrations of O, Si, P, and Mn on the surface of the decarburization annealed sheet are high, or when the amount of Fe-based oxides such as FeSiO₃ and Fe₂SiO₄ is large, excessive film formation may occur during the final annealing, resulting in an increased oxygen coating weight after the final annealing. As a result, the (Ti + V + Zr + Nb coating weight) / oxygen coating weight ratio may be too small. Therefore, it is necessary to suppress film formation during final annealing by increasing the H₂ gas introduction temperature and/or decreasing the heating rate at temperatures between 950 °C and 1100 °C. Furthermore, it is necessary to increase the Ti + V + Zr + Nb coating weight by reducing the oxygen coating weight and/or increasing the amount of Ti, V, Zr, and Nb added to the annealing separator.

On the other hand, when the concentrations of O, Si, P, and Mn on the surface of the decarburization annealed sheet are low, or when the amount of Fe-based oxides such as FeSiO₃ and Fe₂SiO₄ is small, film formation during final annealing may be insufficient, potentially resulting in a low oxygen coating weight after the final annealing. Therefore, it is necessary to promote film formation and increase the oxygen coating weight during final annealing by lowering the H₂ gas introduction temperature and/or increasing the heating rate at temperatures between 950 °C and 1100 °C.

It should be noted that the machine learning model used in this embodiment is not limited A random forest model may be used, or alternatively, a neural network may be employed.

Subsequently, if necessary, insulation coating, flattening annealing, and magnetic domain refinement treatment are performed to obtain a product sheet. The Ti intensity measured by X-ray fluorescence for the product sheet may be measured at any point after final annealing and before the product sheet is completed, following the procedure described above.

Here, the maximum value of the oxygen coating weight is preferably set to 1.00 g/m² or more.

If the maximum value of the oxygen coating weight is less than 1.00 g/m², the amount of film formed may be too small, and the film may be easily destroyed by external stress, leading to insufficient adhesion. It is more preferably 2.00 g/m² or more. Although the upper limit of the maximum value of the oxygen coating weight is not particularly restricted, a value of approximately 10.00 g/m² or less is preferred to avoid a decrease in stacking factor.

In addition, the maximum value of the (Ti + V + Zr + Nb coating weight) / oxygen coating weight ratio is preferably 0.01 or more.

If the maximum value of the (Ti + V + Zr + Nb coating weight) / oxygen coating weight ratio is less than 0.01, the film adhesion may be insufficient. It is more preferably 0.02 or more. Although the upper limit of the maximum value of the (Ti + V + Zr + Nb coating weight) / oxygen coating weight ratio is not particularly restricted, a value of approximately 0.20 or less is preferred, as exceeding this may result in penetration of the metal elements into the steel.

Although the reason why film adhesion can be evaluated based on the value of the (Ti + V + Zr + Nb coating weight) / oxygen coating weight in the product sheet is not fully understood, we presume the following.

That is, compounds of Ti, V, Zr, and Nb added to the annealing separator decompose during final annealing and are incorporated into the forsterite film in the form of nitrides, oxides, or the like, where they segregate at grain boundaries. This grain boundary segregation is believed to enhance the strength of the film. Therefore, the greater the (Ti + V + Zr + Nb coating weight) relative to the amount of forsterite film, the better the film adhesion is expected to be.

Accordingly, by measuring the (Ti + V + Zr + Nb coating weight) / oxygen coating weight, which is indicative of such grain boundary segregation, it is considered possible to evaluate the adhesion of the forsterite film (i.e., film adhesion).

In the example described above, data on the decarburization annealed sheet quality index and the final annealing conditions of the steel sheet are acquired by measurement or calculation, and data on the oxygen coating weight and the (Ti + V + Zr + Nb) coating weight contained in the forsterite film of the product sheet are acquired by measurement. However, the present disclosure is not limited to this case. For instance, if historical data are available, the entire set of such data may be acquired from an external source. One example is that the data may be acquired through a communication interface of a computer. Alternatively, such data may be acquired from other people by transfer or other means. Moreover, in the case of final annealing conditions, instead of relying on calculation or measurement, preset values may be used as the data source. Thus, the acquisition of the data necessary to create the learning model may be implemented in various modified or altered forms.

### EXAMPLES

### [Example 1]

In this example, using a general machine learning tool, a prediction model for each coating weight was created through machine learning by applying neural networks. The objective variables were the actual values of oxygen coating weight and total coating weight of Ti + V + Zr + Nb of product sheets obtained over the past two years. The explanatory variables were the actual values of decarburization annealed sheet quality index, annealing separator composition, and final annealing conditions.

A steel material containing, in mass%, C: 0.03 %, N: 0.004 %, Al: 0.007 %, Si: 3.4 %, and Mn: 0.06 %, with the balance being Fe and inevitable impurities, was first subjected to slab reheating at 1260 °C, followed by hot rolling and then cold rolling. After that, intermediate annealing was performed at 1050 °C for one minute, followed by further cold rolling to obtain a cold-rolled sheet with a thickness of 0.23 mm. Decarburization annealing was then performed under a wet hydrogen atmosphere at 840 °C for two minutes. Subsequently, the steel sheet was divided into 50 segments (i) at 100 m intervals in the longitudinal direction and 10 segments (j) at 100 mm intervals in the transverse direction. At each position (m, n) (where 1 ≤ m ≤ i and 1 ≤ n ≤ j), X-ray fluorescence analysis and infrared spectroscopy were performed to measure the intensity of each element and the formed amount of each oxide at each position (m, n) of the steel sheet.

Next, an annealing separator containing 3 parts by mass of TiO₂ per 100 parts by mass of MgO was applied. After soaking treatment at 850 °C for 50 hours in a nitrogen gas atmosphere, the steel sheet was heated at a heating rate of 15 °C/h at temperatures between 950 °C and 1100 °C. Hydrogen gas was introduced at the predetermined temperature, and soaking treatment was performed at 1200 °C for five hours.

In this example, final annealing was performed under two different sets of conditions. One was in accordance with the present disclosure, in which the H₂ gas introduction temperature for each of 10 coils was individually adjusted within the range of 900 °C to 1050 °C so that, at each position (m, n) of the product sheet, the maximum value of the oxygen coating weight would be 1.00 g/m² or more, and the maximum value of the (Ti + V + Zr + Nb coating weight) / oxygen coating weight ratio would be 0.01 or more. Another was that the H₂ gas introduction temperature was uniformly set to 960 °C for all 10 coils.

After that, a phosphate-based coating was applied, followed by flattening annealing at 850 °C for one minute to obtain a product sheet.

X-ray fluorescence analysis was performed at each position (m, n) on the product sheet thus obtained. The fluorescent X-ray intensities of O, Ti, V, Zr, and Nb were measured, and the coating weights were calculated using calibration curves. Then, the proportion of positions where the maximum value of the oxygen coating weight was 1.00 g/m² or more and the maximum value of the (Ti + V + Zr + Nb coating weight) / oxygen coating weight ratio was 0.01 or more was determined.

The following Tables 1-1 to 8-2 indicate a comparison under the condition where the fluorescent X-ray Mn intensity at the edge portion of the decarburization annealed sheet is high, between: a case in which the H₂ gas introduction temperature during final annealing is adjusted to 980 °C in accordance with the present disclosure, and a case in which the temperature is uniformly set to 960 °C.

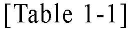

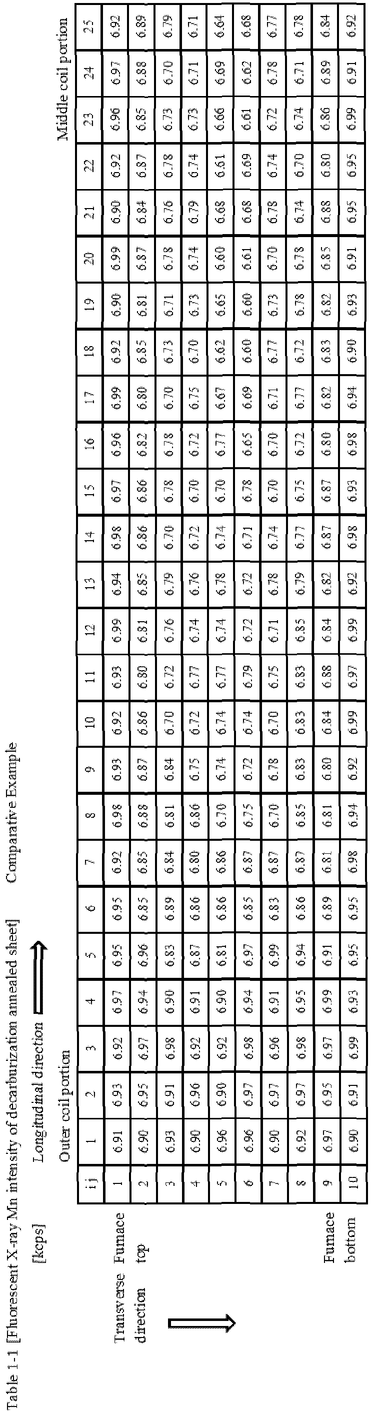

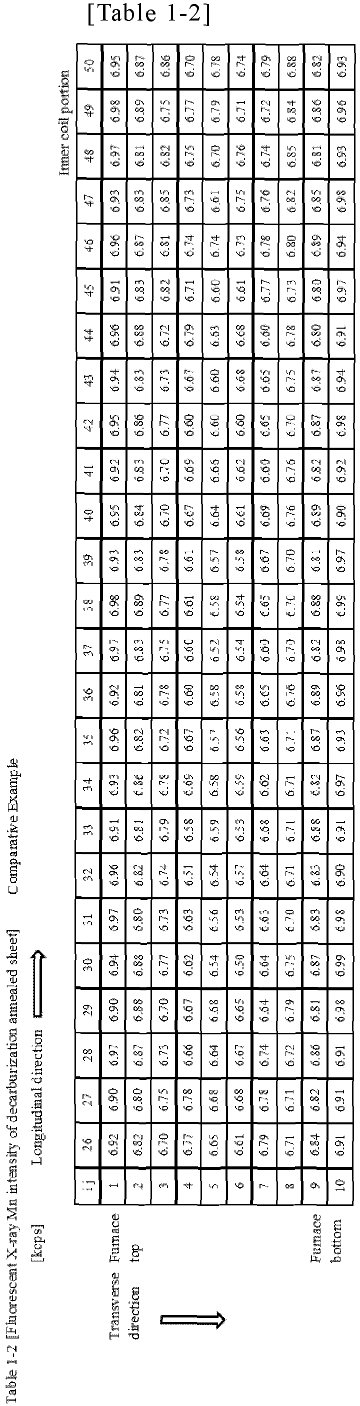

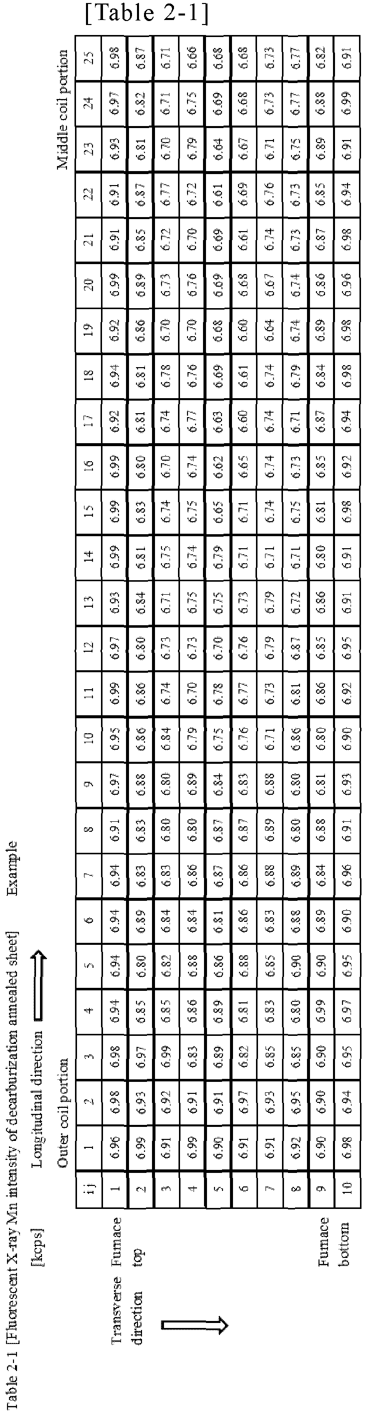

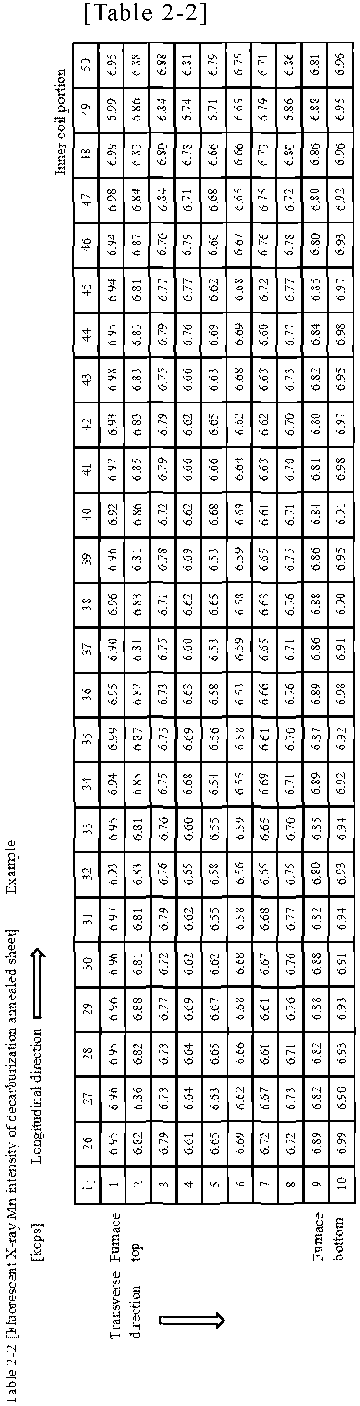

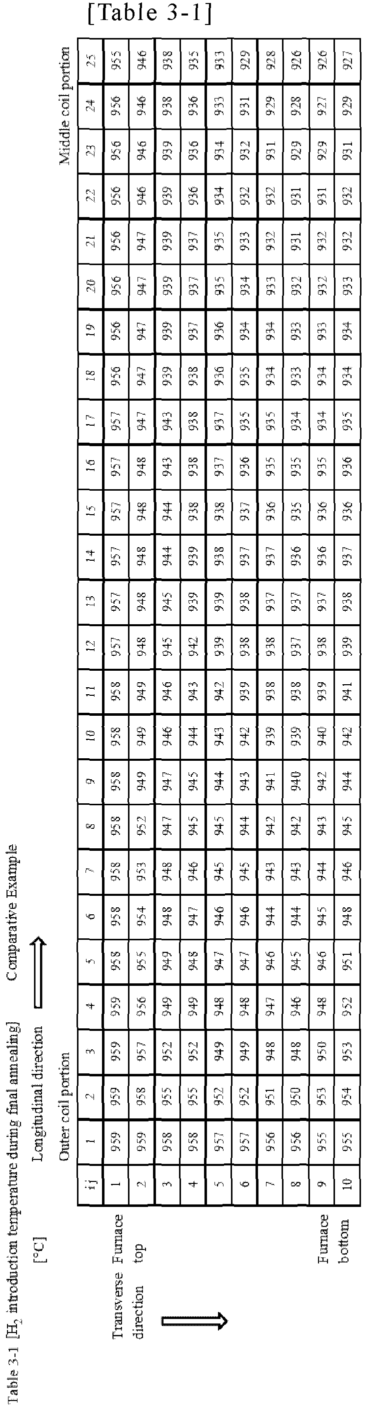

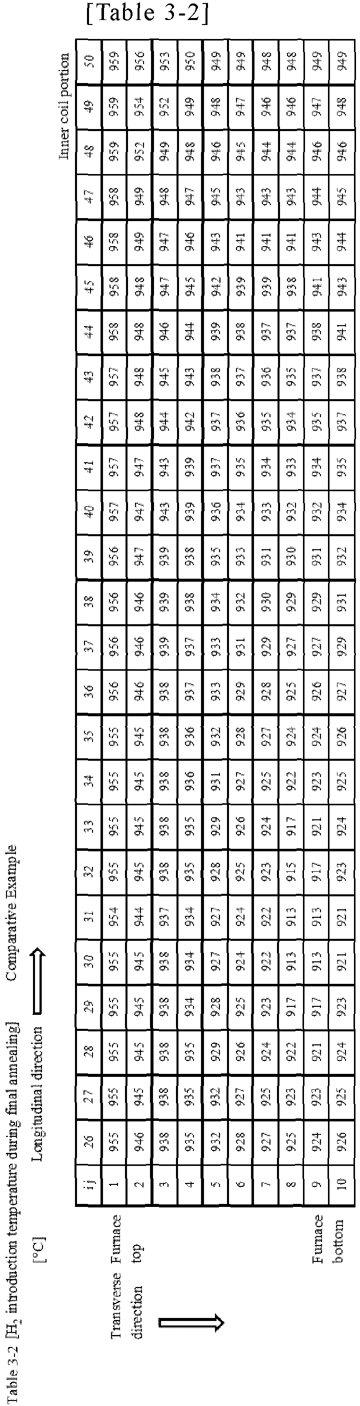

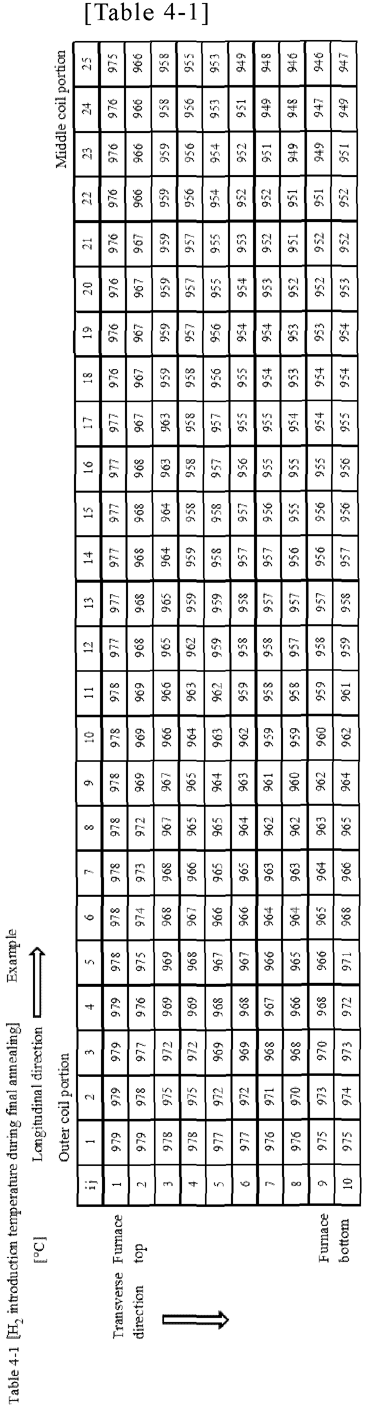

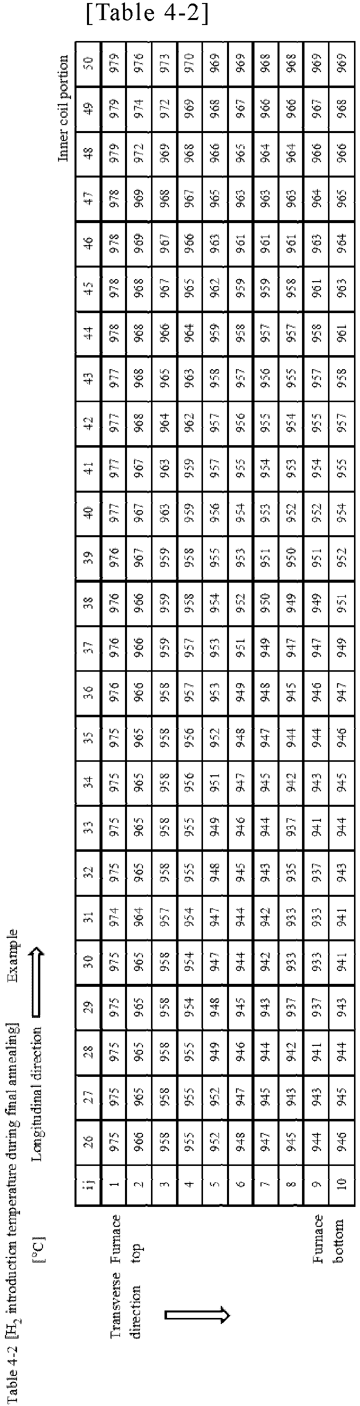

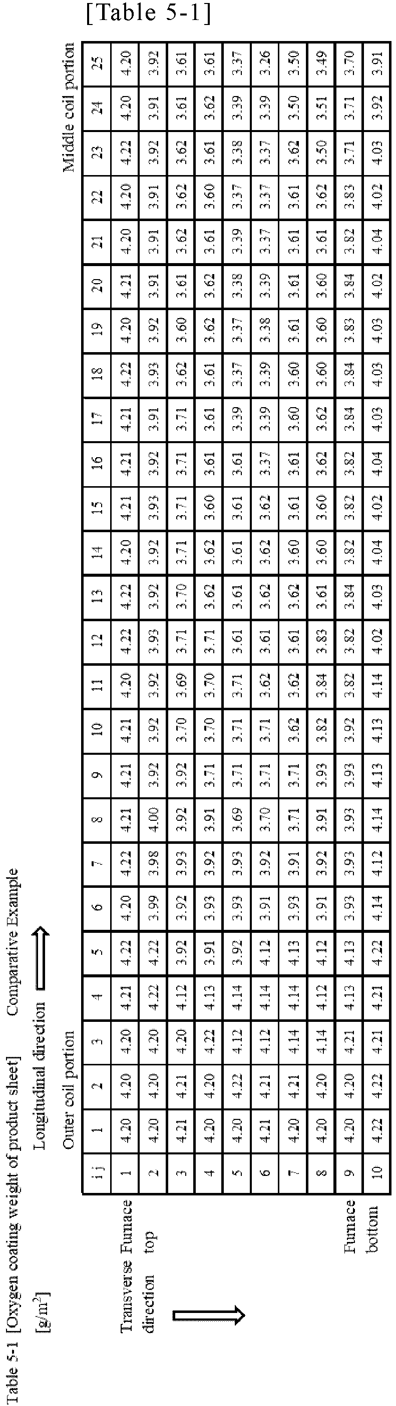

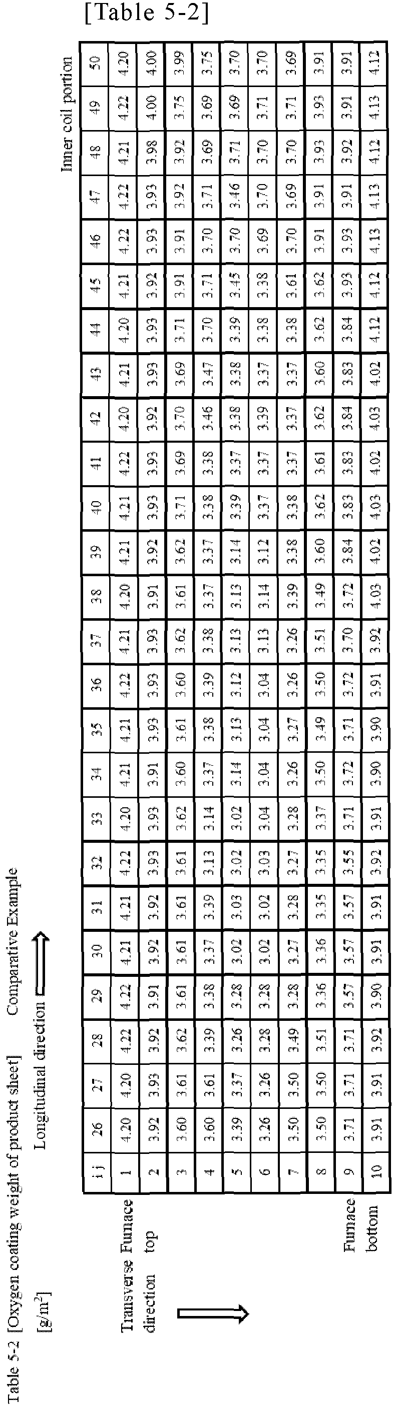

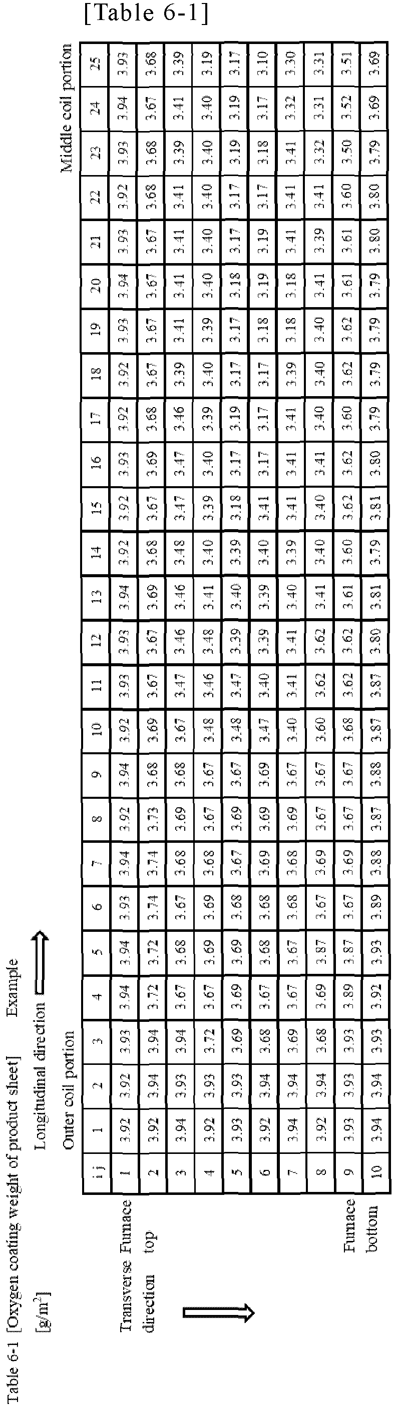

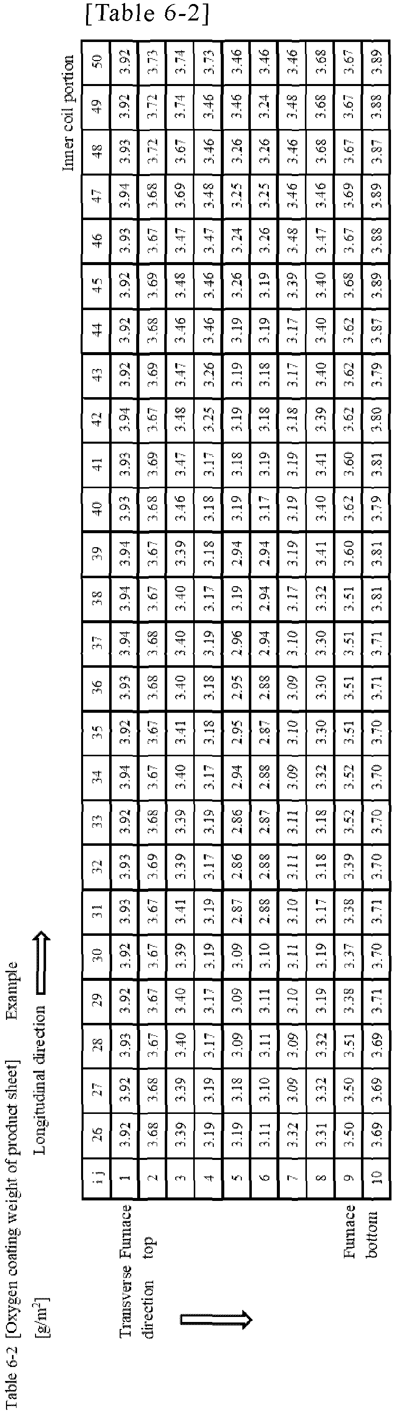

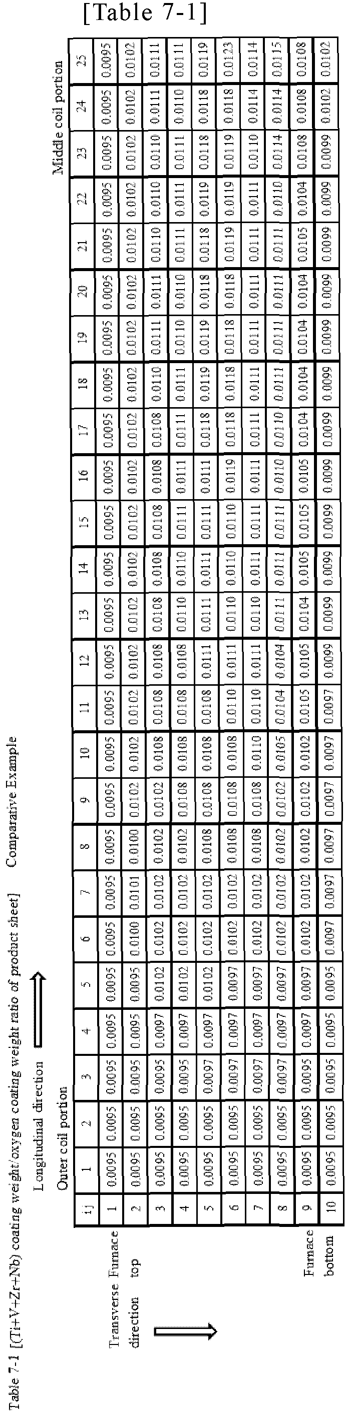

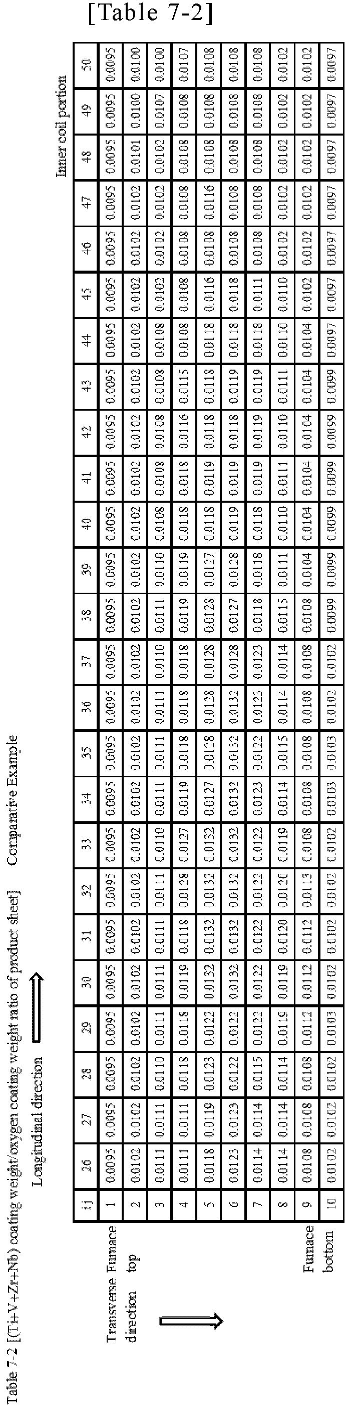

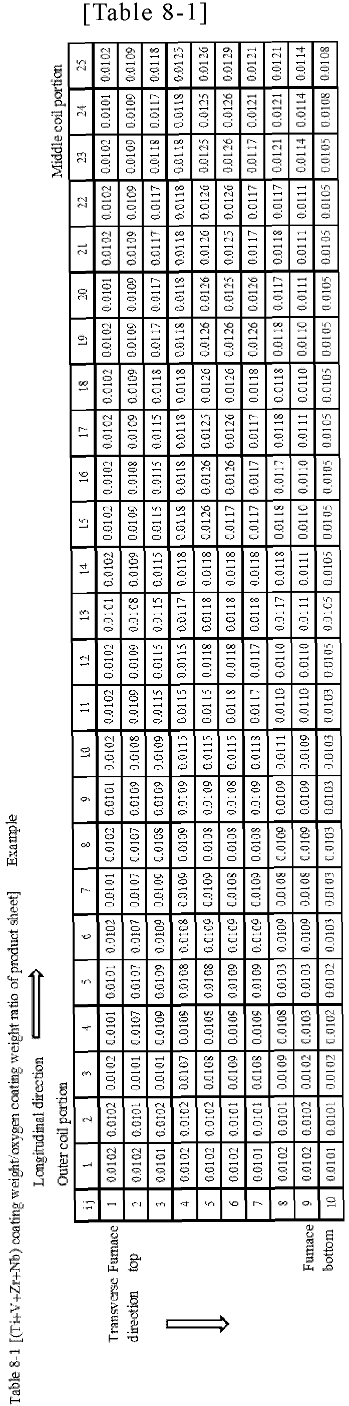

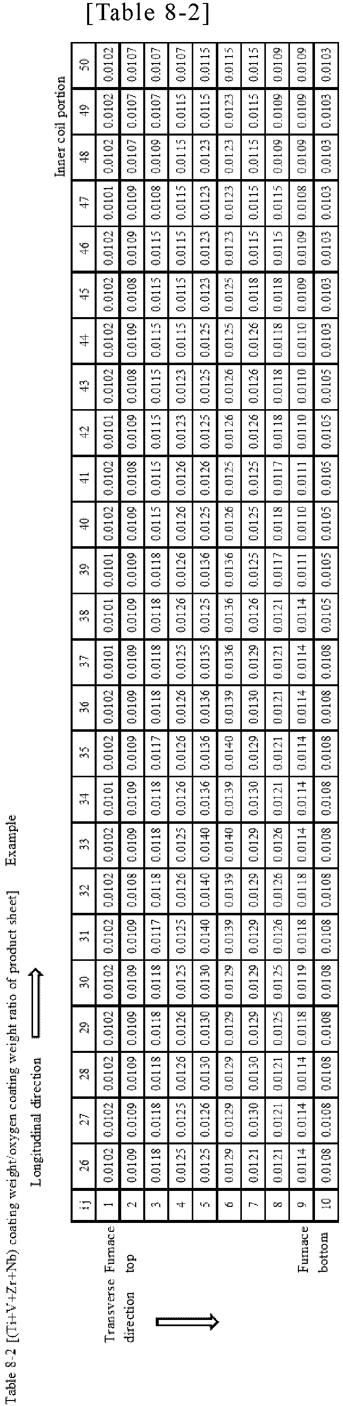

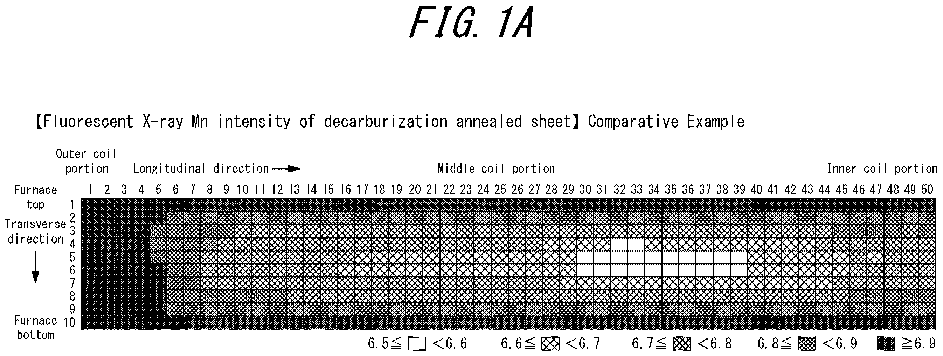

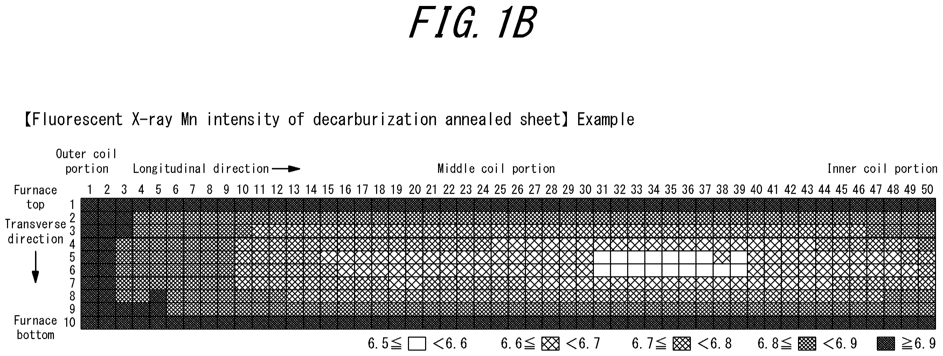

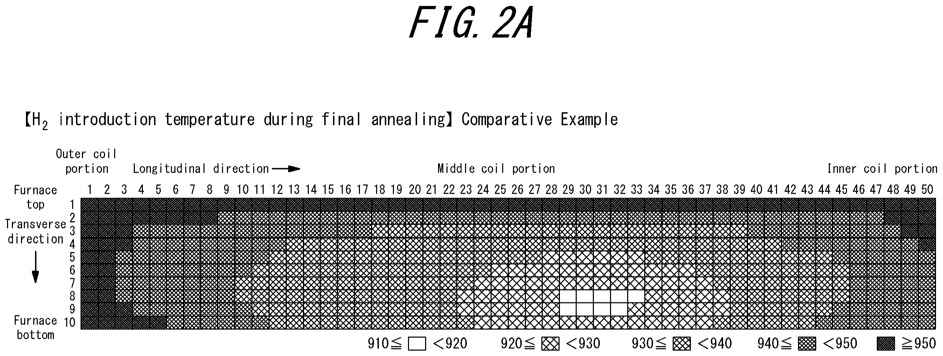

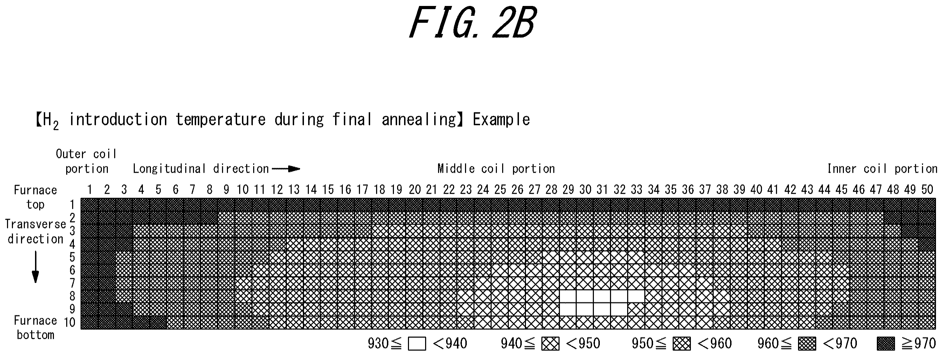

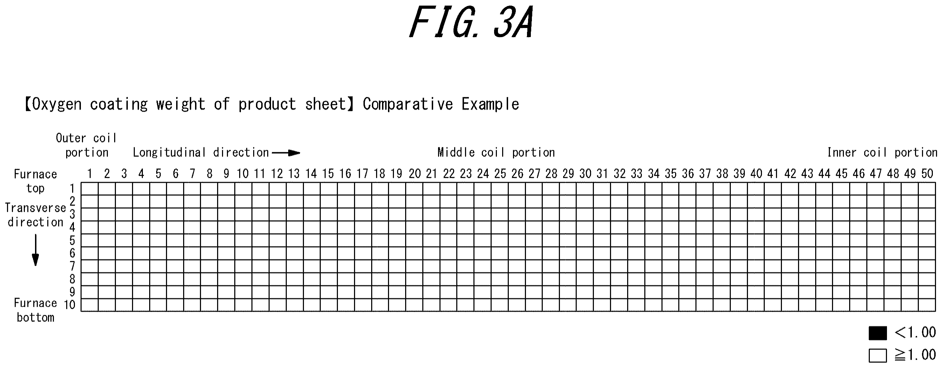

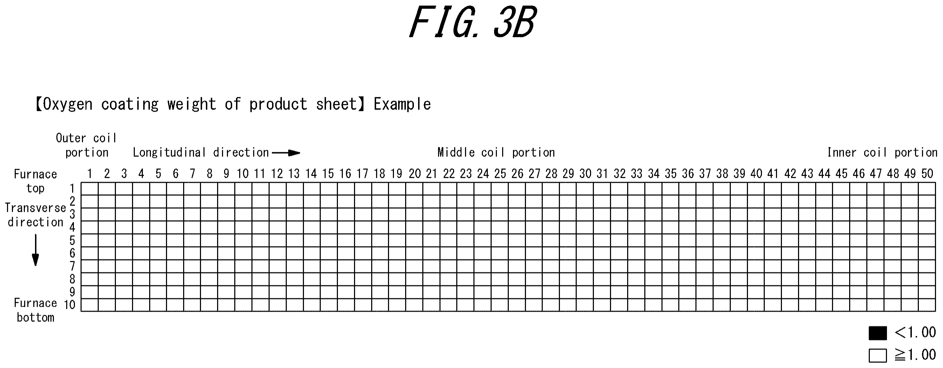

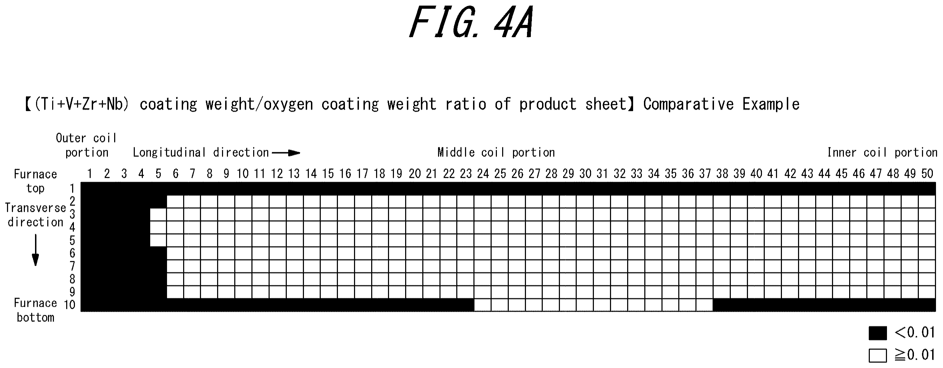

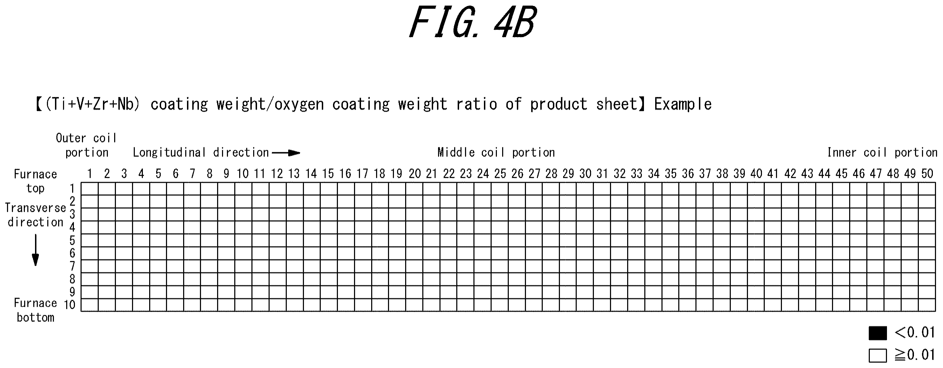

As indicated in Tables 1-1 to 8-2 and FIGS. 1A, 1B, 2A, 2B, 3A, 3B, 4A, and 4B, when the H₂ gas introduction temperature was adjusted to 980 °C in response to a high fluorescent X-ray Mn intensity at the edge portion in the transverse direction of the decarburization annealed sheet, excessive film formation at the upper part of the coil was effectively prevented. As a result, the proportion of positions on the product sheet where the maximum value of the oxygen coating weight was 1.00 g/m² or more and the maximum value of the (Ti + V + Zr + Nb coating weight) / oxygen coating weight ratio was 0.01 or more increased. (In the example of FIG. 4B, the proportion was 100 %.) On the other hand, when the H₂ gas introduction temperature was uniformly set to 960 °C, excessive film formation occurred in the upper part of the coil, and the proportion of positions on the product sheet where the maximum value of the oxygen coating weight was 1.00 g/m² or more and the maximum value of the (Ti + V + Zr + Nb coating weight) / oxygen coating weight ratio was 0.01 or more decreased. (In the example of FIG. 4A, the proportion was 75.4 %.)

Thus, in the case where the H₂ gas introduction temperature was adjusted according to variation in the decarburization annealed sheet quality index (Example), the average proportion of positions across 10 coils was 98.8 % where the maximum value of the oxygen coating weight was 1.00 g/m² or more and the maximum value of the (Ti + V + Zr + Nb coating weight) / oxygen coating weight ratio was 0.01 or more. On the other hand, in the case where the H₂ gas introduction temperature was uniformly set to 960 °C (Comparative Example), the average proportion across 10 coils was 86.6 %.

### [Example 2]

In this example, using a general machine learning tool, a prediction model for each coating weight was created through machine learning by applying a random forest algorithm. The objective variables were the actual values of oxygen coating weight and total coating weight of Ti + V + Zr + Nb of product sheets obtained over the past two years. The explanatory variables were the actual values of decarburization annealed sheet quality index, annealing separator composition, and final annealing conditions.

A steel material containing, in mass%, C: 0.07 %, N: 0.009 %, Al: 0.022 %, Si: 3.4 %, Mn: 0.07 %, and Se: 0.02 %, with the balance being Fe and inevitable impurities, was first subjected to slab reheating at 1380 °C, followed by hot rolling and then cold rolling. After that, intermediate annealing was performed at 1050 °C for one minute, followed by further cold rolling to obtain a cold-rolled sheet with a thickness of 0.23 mm. Decarburization annealing was then performed under a wet hydrogen atmosphere at 840 °C for two minutes. Subsequently, the steel sheet was divided into 50 segments (i) at 100 m intervals in the longitudinal direction and 10 segments (j) at 100 mm intervals in the transverse direction. At each position (m, n) (where 1 ≤ m ≤ i and 1 ≤ n ≤ j), X-ray fluorescence analysis and infrared spectroscopy were performed to measure the intensity of each element and the formed amount of each oxide at each position (m, n) of the steel sheet. Next, an annealing separator containing 3 parts by mass of TiO₂ per 100 parts by mass of MgO was applied. The steel sheet was then heated from room temperature to 950 °C at a heating rate of 15 °C/h, followed by further heating at a predetermined heating rate at temperatures between 950 °C and 1100 °C. H₂ gas was introduced at 950 °C, and soaking was performed at 1200 °C for five hours.

In this example, final annealing was performed under two different sets of conditions. One was that the heating rate at temperatures between 950 °C and 1100 °C for each of 10 coils was individually adjusted within the range of 10 °C/h to 20 °C/h according to the decarburization annealed sheet quality index at each position (m, n) so that, at each position (m, n) of the product sheet, the maximum value of the oxygen coating weight would be 1.00 g/m² or more, and the maximum value of the (Ti + V + Zr + Nb coating weight) / oxygen coating weight ratio would be 0.01 or more. Another was that the heating rate was uniformly set to 15 °C/h for all 10 coils. After that, a phosphate-based coating was applied, followed by flattening annealing at 850 °C for one minute to obtain a product sheet. Subsequently, fluorescence X-ray analysis was performed at each position (m, n) on the product sheet. The fluorescent X-ray intensities of O, Ti, V, Zr, and Nb were measured, and the coating weights were calculated using calibration curves. Then, the proportion of positions where the maximum value of the oxygen coating weight was 1.00 g/m² or more and the maximum value of the (Ti + V + Zr + Nb coating weight) / oxygen coating weight ratio was 0.01 or more was determined.

In the case where the heating rate was adjusted according to variation in the decarburization annealed sheet quality index, the average proportion of positions across 10 coils was 98.7 % where the maximum value of the oxygen coating weight was 1.00 g/m² or more and the maximum value of the (Ti + V + Zr + Nb coating weight) / oxygen coating weight ratio was 0.01 or more. On the other hand, in the case where the heating rate was uniformly set to 15 °C/h, the average proportion across 10 coils was 84.3 %.

## Claims

1. A method for manufacturing a grain-oriented electrical steel sheet, comprising: subjecting a steel material for grain-oriented electrical steel sheet to hot rolling, then to cold rolling either once or twice or more with intermediate annealing performed therebetween, and then to decarburization annealing; applying an annealing separator mainly composed of MgO to a steel sheet surface, and performing final annealing to obtain a product sheet, wherein
data on decarburization annealed sheet quality index and final annealing conditions of the steel sheet are acquired, and data on oxygen coating weight and (Ti + V + Zr + Nb) coating weight contained in a forsterite film of the product sheet are also acquired;
using actual values of each coating weight as objective variables, and using actual values of decarburization annealed sheet quality index, annealing separator composition, and final annealing conditions as explanatory variables, a prediction model for each coating weight is created through multiple regression analysis or machine learning;
the steel sheet is divided into i segments in a longitudinal direction and into j segments in a transverse direction and positions (m, n) are defined where 1 ≤ m ≤ i and 1 ≤ n ≤ j, and using the prediction model for each coating weight and based on values of decarburization annealed sheet quality index at each position (m, n), annealing separator composition and final annealing conditions are set so that both an oxygen coating weight and a (Ti + V + Zr + Nb) coating weight / oxygen coating weight ratio at each position (m, n) fall within a range defined by film adhesion.

2. The method for manufacturing a grain-oriented electrical steel sheet according to claim 1, wherein in the product sheet, a maximum value of the oxygen coating weight is 1.00 g/m² or more, and a maximum value of the (Ti + V + Zr + Nb) coating weight / oxygen coating weight ratio is 0.01 or more.

3. The method for manufacturing a grain-oriented electrical steel sheet according to claim 1 or 2, wherein the decarburization annealed sheet quality index includes at least one selected from the group consisting of O concentration, Si concentration, P concentration, and Mn concentration on the steel sheet surface, and amount of SiO₂, amount of FeSiO₃, and amount of Fe₂SiO₄ formed on the steel sheet surface.

4. The method for manufacturing a grain-oriented electrical steel sheet according to claim 1 or 2, wherein the annealing separator composition includes at least one selected from the group consisting of Ti content, V content, Zr content, and Nb content contained in the annealing separator.

5. The method for manufacturing a grain-oriented electrical steel sheet according to claim 3, wherein the annealing separator composition includes at least one selected from the group consisting of Ti content, V content, Zr content, and Nb content contained in the annealing separator.

6. The method for manufacturing a grain-oriented electrical steel sheet according to claim 1 or 2, wherein the final annealing conditions include either or both of H₂ gas introduction temperature, and heating rate at temperatures between 950 °C and 1100 °C.

7. The method for manufacturing a grain-oriented electrical steel sheet according to claim 3, wherein the final annealing conditions include either or both of H₂ gas introduction temperature, and heating rate at temperatures between 950 °C and 1100 °C.

8. The method for manufacturing a grain-oriented electrical steel sheet according to claim 4, wherein the final annealing conditions include either or both of H₂ gas introduction temperature, and heating rate at temperatures between 950 °C and 1100 °C.

9. The method for manufacturing a grain-oriented electrical steel sheet according to claim 5, wherein the final annealing conditions include either or both of H₂ gas introduction temperature, and heating rate at temperatures between 950 °C and 1100 °C.
